# EUROPEAN PATENT APPLICATION

(11) **EP 4 020 735 A1**
(43) Date of publication of application: **29.06.2022**
(21) Application number: 20216704.5
(22) Date of filing: 22.12.2020
(51) Int. Cl.: H02J 1/12, H02M 3/158, H02H 7/12

(54) **CONVERTER SYSTEM FOR TRANSFERRING POWER**

(71) Applicant: Volvo Car Corporation, 40531 Göteborg (SE)
(72) Inventor: GANNAMANENI, Narendar Rao, 40531 Göteborg (SE); DAREINI, Ali, 40531 Göteborg (SE); HIDALGO, Alberto, 40531 Göteborg (SE); NEELAKANTAN SEETHARAMA IYER, Ram, 40531 Göteborg (SE); PARASTAR, Amir, 40531 Göteborg (SE)
(74) Representative: Maiwald Patent- und Rechtsanwaltsgesellschaft mbH

(57) **Abstract**

The present invention relates to a converter system for transferring power, a vehicle comprising such a converter system and a method for transferring power in such a converter system. The converter system comprises a first converter unit, a second converter unit and a control unit. The first converter unit and the second converter unit is connected in parallel. The first converter unit is connected to a high voltage system via a first series switch unit and the second converter unit is connected to the high voltage system via a second series switch unit. The first converter unit is connected to a low voltage system via a third series switch unit and the second converter unit is connected to the low voltage system via a fourth series switch unit. The control unit is configured to disconnect the first series switch unit and the high voltage system in case of a failure in the first converter unit or to disconnect the second series switch unit and the high voltage system in case of a failure in the second converter unit.

## Description

### TECHNICAL FIELD

The present invention relates to a converter system for transferring power, a vehicle comprising such a converter system and a method for transferring power in such a converter system.

### BACKGROUND ART

In electric vehicles, there are different power conversion modules, which are functional under different scenarios. For example, an on-board charger will convert AC to DC during charging to charge the high voltage battery and a traction inverter will convert DC to AC during driving to drive the vehicle. In both scenarios, either the on-board charger or the traction inverter is functional. However, in order to supply power to low voltage system loads and to maintain the low voltage, a DC-DC converter, which transfers power from high voltage system to low voltage system, must be functional under both scenarios.

The DC-DC converter is more stressed when compared to other power conversion modules and this makes design requirements of the DC-DC converter more complex. If the DC-DC converter fails during driving, some of vehicle functions supplied from the low voltage system could be at risk, particularly when a charge state on a low voltage battery is low. Moreover, the DC-DC converter is turned off when the vehicle is in key-off state. In conventional electric vehicles, a low voltage control unit relies on a low voltage battery supply. Accordingly, if the vehicle is parked for some months, the low voltage battery will be in deep discharge state and the vehicle may be completely shut down.

### SUMMARY

There may be a need to provide an improved converter system, which allows a more reliable low voltage supply.

The problem is solved by the subject matters of the independent claims of the present disclosure, wherein further embodiments are incorporated in the dependent claims. It should be noted that the aspects of the disclosure described in the following apply to the converter system for transferring power, a vehicle comprising such a converter system and a method for transferring power in such a converter system.

According to the present disclosure, a converter system for transferring power is presented. The converter system comprises a first converter unit, a second converter unit and a control unit. The first converter unit and the second converter unit is connected in parallel. The first converter unit is connected to a high voltage system via a first series switch unit and the second converter unit is connected to the high voltage system via a second series switch unit. The first converter unit is connected to a low voltage system via a third series switch unit and the second converter unit is connected to the low voltage system via a fourth series switch unit. The control unit is configured to disconnect the first series switch unit and the high voltage system in case of a failure in the first converter unit or to disconnect the second series switch unit and the high voltage system in case of a failure in the second converter unit.

The converter system of the present disclosure may reduce a risk of single point failures inside the first converter unit and the second converter unit. Further, the converter system may still operate even in case of a malfunction of the first converter unit and/or second converter unit, by providing power availability on the low voltage system. Accordingly, a high safety integration of the converter system may be achieved.

The converter system may transfer power from a high voltage system to a low voltage system and/or from the low voltage system to the high voltage system. The low voltage system may provide a voltage of 12V or 48V. The high voltage system may provide a voltage of 400V or 800V. However, an inlet voltage of the high voltage system may vary in case of 400V between 250V and 500V and in case of 800V between 500V and 1000V depending on the configuration of the high voltage system.

The first converter unit and the second converter unit may comprise an isolated DC-DC converter. The isolated DC-DC converter may be galvanically isolated and may prevent an occurrence of an overvoltage due to an isolation fault in a higher voltage part of the charging system. The isolated DC-DC converter may allow a lower cost for the at least one auxiliary component and may enable the compatibility with existing fast-charge DC-charging stations.

The first converter unit and the second converter unit, which are connected in parallel to each other, may operate dependently of a load consumption in order to maximize an efficiency of the converter system. In other words, the first converter unit and the second converter unit may operate alone or together to provide an efficient power supply.

The first converter unit and the second converter unit may be separately coupled with the high voltage system via a series switch. In other words, the first converter unit may be connected to the high voltage system in series via the first switch unit and the second converter unit may be connected to the high voltage system in series via the second switch unit. The first converter unit and the second converter unit may be separately coupled with the low voltage system via a series switch as well. Accordingly, the first converter unit may be connected to the low voltage system in series via the third switch unit and the second converter unit may be connected to the low voltage system in series via the fourth switch unit.

The control unit may be configured to monitor the first converter unit and the second converter unit and detect which converter unit has a malfunction. The malfunction may occur inside the first converter unit and/or the second converter unit and it may be a hardware component failure, a software control failure or a combination of both.

If the control unit receives any fault signal from the first converter unit, the control unit may open the first series switch unit to separate the first converter unit from the second converter unit and from the high voltage system. Meanwhile, the second series switch unit may stay closed to maintain a connection with the high voltage system. In contrast, if the control unit receives any fault signal from the second converter unit, the control unit may open the second series switch unit to separate the second converter unit from the first converter unit and from the high voltage system. Meanwhile, the first series switch unit may stay closed to maintain the first converter unit and the high voltage system.

In an embodiment, the control unit may be configured to disconnect the third series switch unit and the low voltage system in case of a failure in the first converter unit or to disconnect the fourth series switch unit and the low voltage system in case of a failure in the second converter unit.

If the control unit receives any fault signal from the first converter unit, the control unit may open the third series switch unit to separate the first converter unit from the second converter unit and from the low voltage system. Meanwhile, the fourth series switch unit may stay closed to maintain a connection with the low voltage system. In contrast, if the control unit receives any fault signal from the second converter unit, the control unit may open the fourth series switch unit to separate the second converter unit from the first converter unit and from the low voltage system. Meanwhile, the third series switch unit may stay closed to connect the first converter unit and the low voltage system.

Accordingly, the first converter unit and the second converter unit may operate independently of each other, which may lead to a reliable converter system.

In an embodiment, the converter system further comprises a third converter unit. The third converter unit is connected to each of the first and the second converter units in parallel, and the third converter is connected to each of the high voltage system and the low voltage system directly. In other words, the third converter unit may be connected to all of the high/low voltage systems and first/second converter units without any switches.

Generally, the first converter unit and/or second converter unit may supply power to the low voltage system. However, in case of a malfunction of both converter units, the third converter unit may supply power to the low voltage system. Hence, the third converter unit may need to operate independently of the first converter unit and the second converter unit. Accordingly, the third converter unit may ensure a reliable power supply, even though the first converter unit and the second converter unit would fail.

In an embodiment, the third converter unit comprises a low power isolated DC-DC converter. The low power isolated DC-DC converter may be configured to transfer power from the high voltage system to the low voltage system to keep supplying power to low voltage loads such as opening a door or a window to open, starting the motor etc. Hence, the low voltage loads may operate also in case of an emergency, in which the first and the second converter units fail.

In an embodiment, the low power isolated DC-DC converter is a flyback converter configured to operate as a transformer. A flyback converter may transform a DC voltage at an input to a DC voltage at an output, which are galvanically isolated. The low power isolated DC-DC converter may be a simple isolated converter with a high voltage side (input) regulation. In the flyback converter, a voltage may be transformed down to a value determined by the ratio in turns. Accordingly, the low power DC-DC converter may efficiently transform the voltage from the high voltage system to the low voltage system.

In an embodiment, the first, second, third and/or fourth series switch unit comprises a power semiconductor switch element, which may be a semiconductor device applying electronic properties of a semiconductor material. The power semiconductor switch element does not have no mechanical moving parts. Thus, they may have very less failure, very less power/switching loss and long life. Accordingly, the power semiconductor switch element may allow a high efficient power switching. The power semiconductor switch element may comprise a Metal-Oxide-Semiconductor Field-Effect Transistor (MOSFET), a Bipolar - Junction Transistor (BJT), an Insulated-Gate Bipolar Transistor (IGBT) or a Thyristors (SCR, GTO, MCT).

In an embodiment, the power semiconductor switch element is an MOSFET (metal oxide semiconductor field-effect transistor) or an IGBT (insulated-gate bipolar transistor). The MOSFET and IGBT may allow a fast response time of an opening and/or a closing of the switches compared to relays, which have bouncing times.

In an embodiment, the first series switch unit and/or the second series switch unit further comprises a precharging resistor and a semiconductor switch, which may be configured to control an opening and/or a closing of the first and/or the second series switch unit. A switch element and the precharging resistor may be arranged between the high voltage system and the semiconductor switch. When turning on the switch element, the semiconductor switch may be charged through the resistor, accordingly the resistor may limit an inrush current to prevent a damage. Hence, as soon as a high voltage is applied to high voltage DC terminals, the semiconductor switch may pre-charge through the precharging resistor. The switch element of the first and/or the second series switch unit may be closed, when the semiconductor switch is charged up to 95% of an input voltage.

In an embodiment, the third series switch unit and/or fourth series switch unit comprises two switch elements arranged in a back-to-back position. The third and/or fourth switch unit may comprise two switch elements, which are arranged in an opposite direction to each other. The switch elements may be a power semiconductor switch element such as an MOSFET or an IGBT. The switch elements may comprise a common source or common emitter configuration. Accordingly, the third series switch unit and/or fourth series switch unit may block a current flowing in a reverse direction and perform a reverse-voltage protection, in particular in a bi-directional power switch unit.

In an embodiment, the control unit comprises a separate digital signal processor for each of the first and second converter units or a single microcontroller to control them together. In other words, the control unit may comprise a first control element for the first converter unit and a second control element for the second converter unit to separately control the first and second converter units. Each of the first control element and the second control element may be a digital signal processor, which may be configured to continuously perform a digital signal processing algorithm in real-time. Accordingly, a high safety integrity level of the converter system may be achieved. Alternatively, a single microcontroller may be used to control the first converter unit and the second converter unit together.

In an embodiment, the control unit is configured to operate the third converter unit, even if the first converter unit and the second converter unit are turned off. The control unit may comprise a third control element to control the third converter unit. The third control element may be an analog controller or a third digital signal processor. Accordingly, the third converter unit may be controlled and operate independently of the first and second converter units, especially in case of a failure in the first and/or second converter units. Alternatively, the microcontroller may be configured to control the third converter unit separately from the first and second converter units.

In an embodiment, the first converter unit and the second converter unit are configured to transfer power from the low voltage system to the high voltage system. In other words, the converter system may be configured to transfer power bi-directionally, not only from the high voltage system to the low voltage system but also from the low voltage system to the high voltage system. Accordingly, both voltage systems may supply power to each other depending on an operating state or a charging state of the respective voltage system to increase an efficiency.

In an embodiment, the first converter unit and the second converter unit comprise a dual active bridge unit or a phase shift unit. The dual active bridge unit or the phase shift unit may be a bi-directional DC-DC converter unit, which allows a bi-directional power transfer. The dual active bridge unit or the phase shift unit may comprise a center-tapped transformer with two winding portions connected to two secondary synchronous rectification switches or secondary current doubler. Accordingly, a reliable transfer of power from the high voltage system to the low voltage system and from the low voltage system to the high voltage system may be realised.

According to the present disclosure, also a vehicle is presented. The vehicle comprises a converter system as described above, wherein the vehicle is an electric vehicle. The converter system may allow a power transfer between the high voltage system and the low voltage system even though a failure in the first converter unit or in the second converter unit occur. The first converter unit and the second converter unit arranged in parallel to each other may be connected or disconnected independently to the high voltage system and low voltage system via the respective series switch units. Hence, a reliable power supply to the vehicle may be achieved.

In an embodiment, the converter system is configured to operate a third converter unit in a key-off state. The third converter unit may be a low power isolated DC-DC converter, which may be directly connected to the high voltage system and to the low voltage system. The third converter unit may be configured to supply power, particularly to low voltage loads such as opening a window or door, or starting a motor in case of a failure of the first and second converter units.

If the vehicle is for a longer period in a parking mode, the low voltage system may be in a deep discharge state and the vehicle may be completely shut down. The low power isolated DC-DC converter may be turned on in the key off state of the vehicle and supply power to the low voltage system. Accordingly, a pre-defined state of charge of the low voltage system may be maintained and a complete shutdown of the vehicle may be avoided

According to the present disclosure, also a method for transferring power in a converter system is presented. The method comprises the steps of, not necessarily in this order:
- connecting a first converter unit and a second converter unit in parallel,
- connecting the first converter unit to the high voltage system via a first series switch unit,
- connecting the second converter unit to the high voltage system via a second series switch unit,
- connecting the first converter unit to the low voltage system via a third series switch unit,
- connecting the second converter unit to the low voltage system via a fourth series switch unit,
- in case of a failure in the first converter unit, disconnecting the first series switch unit and the high voltage system, or
- in case of a failure in the second converter unit, disconnecting the second series switch unit and the high voltage system.

Hence, the converter system may operate even any single point failure of the first and second converter units. Furthermore, a power supply to the low voltage system may be available even though the first converter unit and the second converter unit are turned off for a longer period.

It should be noted that the above embodiments may be combined with each other irrespective of the aspect involved. Accordingly, the method may be combined with structural features and, likewise, the system may be combined with features described above with regard to the method.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
- Fig. 1: shows schematically and exemplarily an embodiment of a converter system for transferring power according to the disclosure.
- Fig. 2: shows schematically and exemplarily an embodiment of a first converter unit according to the disclosure.
- Fig. 3: shows schematically and exemplarily an embodiment of a circuit topology of the first and second converter unit according to the disclosure.

### DESCRIPTION OF EMBODIMENTS

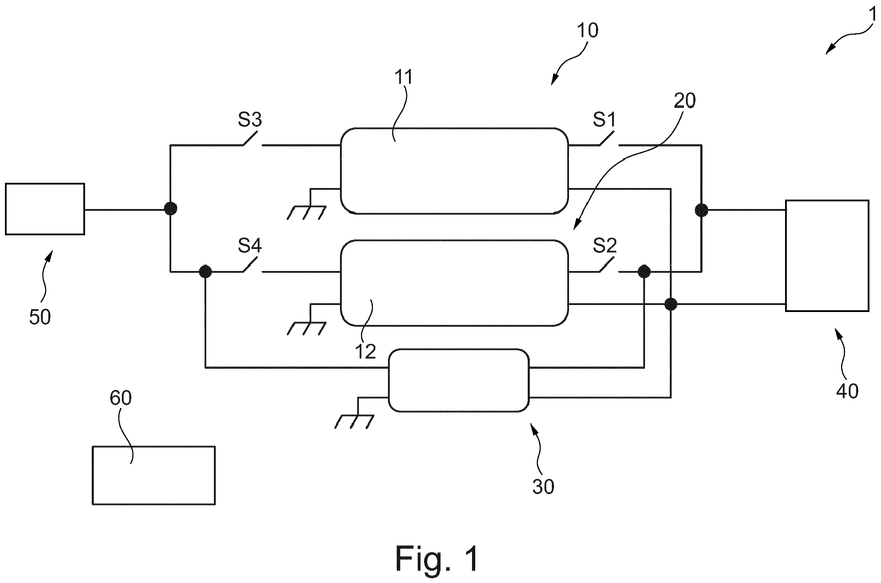

Fig. 1 show a converter system 1 for transferring power. The converter system 1 is configured to transfer power from a high voltage system 40 to a low voltage system 50 or from the low voltage system 50 to the high voltage system 40. The high voltage system 40 may have a voltage of 400V or 800V and the low voltage system 50 may have a voltage of 12 V or 48V. The converter system 1 may be integrated in an electric vehicle to transfer power.

The converter system 1 comprises a first converter unit 10, a second converter unit 20 and a control unit 60. The first converter unit 10 and the second converter unit 20 are connected in parallel. The first converter unit 10 and the second converter unit 20 may comprise an isolated a DC-DC converter. The first converter unit 10 is connected to the high voltage system 40 via a first series switch unit S1 and to the low voltage system 50 via a third series switch unit S3. The second converter unit 20 is connected to the high voltage system 40 via a second series switch unit S2 and to the low voltage system 50 via a fourth series switch unit S4.

The control unit 60 comprises a separate digital signal processor for each of the first and second converter units 10, 20 or a single microcontroller to control them together. The control unit 60 is configured to disconnect the first series switch unit S1 and the high voltage system 40 in case of a failure in the first converter unit 10 or to disconnect the second series switch unit S2 and the high voltage system 40 in case of a failure in the second converter unit 20. Also, the control unit 60 is configured to disconnect the third series switch unit S3 and the low voltage system 50 in case of a failure in first converter unit 10 or to disconnect the fourth series switch unit S4 and the low voltage system 50 in case of a failure in the second converter unit 20. The failure may occur in each of the first and/or second converter unit 20, for example a hardware component failure, a software control failure or a combination of both.

If the control unit 60 receives any fault signal from the first converter unit 10, the control unit 60 may open the first series switch unit S1 to separate the first converter unit 10 from the second converter unit 20 and from the high voltage system 40. Meanwhile, the second series switch unit S2 may stay closed to maintain a connection with the high voltage system 40. In contrast, if the control unit 60 receives any fault signal from the second converter unit 20, the control unit 60 may open the second series switch unit S2 to separate the second converter unit 20 from the first converter unit 10 and from the high voltage system 40. Meanwhile, the first series switch unit S1 may stay closed to maintain the first converter unit 10 and the high voltage system 40.

Further, if the control unit 60 receives any fault signal from the first converter unit 10, the control unit 60 may open the third series switch unit S3 to separate the first converter unit 10 from the second converter unit 20 and from the low voltage system 50. Meanwhile, the second series switch unit S2 may stay closed to maintain a connection with the low voltage system 50. In contrast, if the control unit 60 receives any fault signal from the second converter unit 20, the control unit 60 may open the fourth series switch unit S4 to separate the second converter unit 20 from the first converter unit 10 and from the low voltage system 50. Meanwhile, the fourth series switch unit S4 may stay closed to maintain the first converter unit 10 and the high voltage system 50.

The converter system 1 further comprises a low power isolated DC-DC converter as a third converter system 30. The low power isolated DC-DC converter may be a flyback converter configured to operate as a transformer. The low power isolated DC-DC converter 30 is connected to each of the first and second converter units 10, 20 in parallel and to each of the high voltage system 40 and low voltage system 50 directly. The low power isolated DC-DC converter is configured to supply power, particularly to low voltage loads such as opening a window or door, or starting a motor in case of a failure of the first and second converter units 10, 20 or in a key-off state of the vehicle. The control unit 60 is configured to operate the third converter unit 30, even if the first converter unit 10 and the second converter unit 20 are turned off.

The first, second, third and/or fourth series switch unit S1, S2, S3, S4 comprises a power semiconductor switch element 13 such as a MOSFET (metal oxide semiconductor field-effect transistor) or IGBT (insulated-gate bipolar transistor). The power semiconductor switch element 13 allows a fast response time of an opening and/or a closing of the switches.

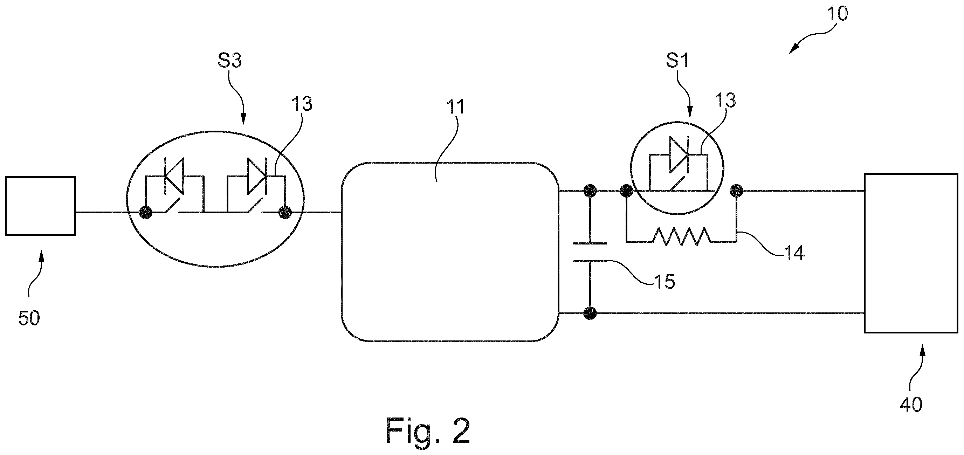

As shown in Fig. 2, the first series switch unit S1 further comprises a precharging resistor 14 and a semiconductor switch 15, which may be configured to control an opening and/or a closing of the first series switch unit S1. When turning on the switch element 13, the semiconductor switch 15 may be charged through the resistor 14, accordingly the resistor 14 may limit an inrush current to prevent a damage.

The third series switch unit S3 comprises two switch elements 13 arranged in a back-to-back position, wherein the switch elements 13 comprises a common source or common emitter configuration. Accordingly, the third series switch unit S3 may block a current flowing in a reverse direction and perform a reverse-voltage protection, in particular in a bi-directional power switch unit. The second series switch unit S2 comprises the same switch configuration as the first series switch unit S1 and the fourth series switch unit S4 the same switch configuration as the third series switch unit S3.

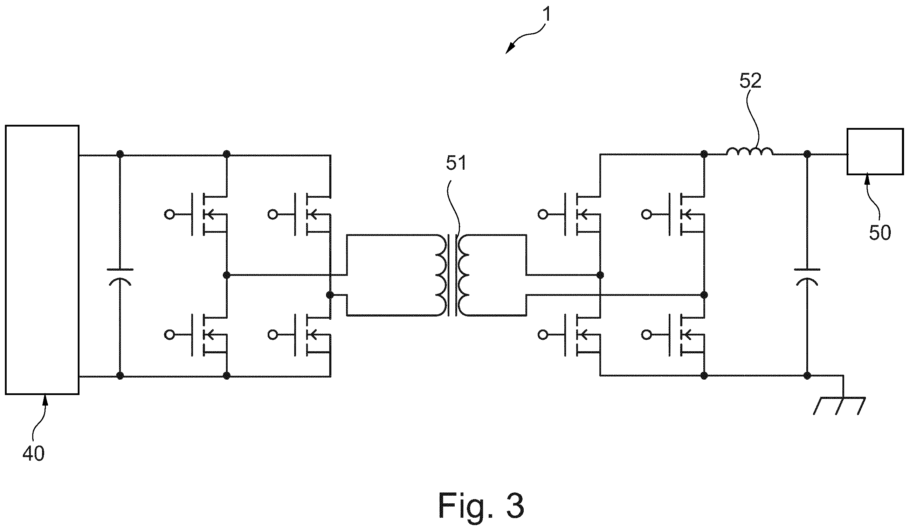

As shown in Fig. 3, the first converter unit 10 and the second converter unit 20 comprise a dual active bridge unit or a phase shift unit 51. The dual active bridge unit or the phase shift unit 51 may be a bi-directional DC-DC converter unit, which allows a bi-directional power transfer. The dual active bridge unit or the phase shift unit 51 may comprise a center-tapped transformer with two winding portions connected to secondary synchronous rectification switches or a secondary current doubler 52. Accordingly, a reliable transfer of power from the high voltage system 40 to the low voltage system 50 and from the low voltage system 50 to the high voltage system 40 may be realised.

It has to be noted that embodiments of the disclosure are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed embodiments. Other variations to the disclosed embodiments can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A converter system (1) for transferring power, comprising:
- a first converter unit (10),
- a second converter unit (20), and
- a control unit (60),
the first converter unit (10) and the second converter unit (20) being connected in parallel,
the first converter unit (10) being connected to a high voltage system (40) via a first series switch unit (S1) and the second converter unit (20) being connected to the high voltage system (40) via a second series switch unit (S2),
the first converter unit (10) being connected to a low voltage system (50) via a third series switch unit (S3) and the second converter unit (20) being connected to the low voltage system (50) via a fourth series switch unit (S4), and
the control unit (60) being configured to disconnect the first series switch unit (S1) and the high voltage system (40) in case of a failure in the first converter unit (10) or to disconnect the second series switch unit (2) and the high voltage system (40) in case of a failure in the second converter unit (20).

2. The converter system (1) according to claim 1, further comprising a third converter unit (30),
the third converter unit (30) being connected to each of the first and the second converter units (10, 20) in parallel, and
the third converter unit (30) being connected to each of the high voltage system (40) and the low voltage system (50) directly.

3. The converter system (1) according to the preceding claim, the third converter unit (30) comprising a low power isolated DC-DC converter.

4. The converter system (1) according to claim 2 or 3, the low power isolated DC-DC converter being a flyback converter configured to operate as a transformer.

5. The converter system (1) according to any of the preceding claims, the first, second, third and/or fourth series switch unit (SI, S2, S3, S4) comprising a power semiconductor switch element (13).

6. The converter system (1) according to the preceding claim, the power semiconductor switch element (13) being a MOSFET (metal oxide semiconductor field-effect transistor) or IGBT (insulated-gate bipolar transistor).

7. The converter system (1) according to any of the preceding claims, the first series switch unit (S1) and/or the second series switch unit (S2) further comprising a precharging resistor (14) and a semiconductor switch (15).

8. The converter system (1) according to any of the preceding claims, the third series switch unit (S3) and/or fourth series switch unit (S4) comprising two switch elements (13) arranged in a back-to-back position.

9. The converter system according to any of the preceding claims, the control unit (60) comprising a separate digital signal processor for each of the first (10) and second converter units (20) or a single microcontroller to control them together.

10. The converter system (1) according to any of the preceding claims, the control unit (60) being configured to operate the third converter unit (30), even if the first converter unit (10) and the second converter unit (20) are turned off.

11. The converter system (1) according to any one of the preceding claims, the first converter unit (10) and the second converter unit (20) being configured to transfer power from the low voltage system (50) to the high voltage system (40).

12. The converter system (1) according to the preceding claim, the first converter unit (10) and the second converter unit (20) comprising a dual active bridge unit or a phase shift unit (51).

13. A vehicle comprising a converter system (1) according to claims 1 to 12, the vehicle being an electric vehicle.

14. The vehicle according to claim 13, the converter system (1) being configured to operate a third converter unit (30) in a key-off state.

15. A method for transferring power in a converter system, comprising the following steps:
- connecting a first converter unit (10) and a second converter unit (20) in parallel,
- connecting the first converter unit (10) to the high voltage system (40) via a first series switch unit (S1),
- connecting the second converter unit (20) to the high voltage system (40) via a second series switch unit (S2),
- connecting the first converter unit (10) to the low voltage system (50) via a third series switch unit (S3), and
- connecting the second converter unit (20) to the low voltage system (50) via a fourth series switch unit (S4),
- in case of a failure in the first converter unit (10), disconnecting the first series switch unit (S1) and the high voltage system (40), or
- in case of a failure in the second converter unit (20), disconnecting the second series switch unit (S2) and the high voltage system (40).

## Amended claims

### Amended claims in accordance with Rule 137(2) EPC.

1. A converter system (1) for transferring power, comprising:
- a first converter unit (10),
- a second converter unit (20),
- a third converter unit (30), and
- a control unit (60),
the first converter unit (10) and the second converter unit (20) being connected in parallel,
the first converter unit (10) being connected to a high voltage system (40) via a first series switch unit (S1) and the second converter unit (20) being connected to the high voltage system (40) via a second series switch unit (S2),
the first converter unit (10) being connected to a low voltage system (50) via a third series switch unit (S3) and the second converter unit (20) being connected to the low voltage system (50) via a fourth series switch unit (S4),
the third converter unit (30) being connected to each of the first and the second converter units (10, 20) in parallel,
and
the control unit (60) being configured to disconnect the first series switch unit (S1) and the high voltage system (40) in case of a failure in the first converter unit (10) or to disconnect the second series switch unit (2) and the high voltage system (40) in case of a failure in the second converter unit (20), **characterized in that** the third converter unit (30) being connected to each of the high voltage system (40) and the low voltage system (50) directly.

2. The converter system (1) according to claim 1, the third converter unit (30) comprising a low power isolated DC-DC converter.

3. The converter system (1) according to claim 2, the low power isolated DC-DC converter being a flyback converter configured to transform a DC voltage at an input to a DC voltage at an output.

4. The converter system (1) according to any of the preceding claims, the first, second, third and/or fourth series switch unit (S1, S2, S3, S4) comprising a power semiconductor switch element (13).

5. The converter system (1) according to claim 4, the power semiconductor switch element (13) being a MOSFET or IGBT.

6. The converter system (1) according to any of the preceding claims, the third series switch unit (S3) and/or fourth series switch unit (S4) comprising two switch elements (13) arranged in a back-to-back position.

7. The converter system according to any of the preceding claims, the control unit (60) comprising a separate digital signal processor for each of the first (10) and second converter units (20) or a single microcontroller to control them together.

8. The converter system (1) according to any of the claims 2 and 3, the control unit (60) being configured to operate the third converter unit (30), even if the first converter unit (10) and the second converter unit (20) are turned off.

9. The converter system (1) according to any one of the preceding claims, the first converter unit (10) and the second converter unit (20) being configured to transfer power from the low voltage system (50) to the high voltage system (40).

10. The converter system (1) according to claim 9, the first converter unit (10) and the second converter unit (20) comprising a dual active bridge unit or a phase shift unit (51).

11. A vehicle comprising a converter system (1) according to any of claims 1 to 10, the vehicle being an electric vehicle.

12. The vehicle according to any of the claims 2 and 3, the converter system (1) being configured to operate the third converter unit (30) in a key-off state.

13. A method for transferring power in a converter system, comprising the following steps:
- connecting a first converter unit (10), a second converter unit (20) and a third converter unit (30) in parallel,
- connecting the first converter unit (10) to the high voltage system (40) via a first series switch unit (S1),
- connecting the second converter unit (20) to the high voltage system (40) via a second series switch unit (S2),
- connecting the first converter unit (10) to the low voltage system (50) via a third series switch unit (S3), and
- connecting the second converter unit (20) to the low voltage system (50) via a fourth series switch unit (S4),
- in case of a failure in the first converter unit (10), disconnecting the first series switch unit (S1) and the high voltage system (40), or
- in case of a failure in the second converter unit (20), disconnecting the second series switch unit (S2) and the high voltage system (40), **characterized in that**
the third converter unit (30) is connected to each of the high voltage system (40) and the low voltage system (50) directly.
